# EUROPÄISCHE PATENTANMELDUNG

(11) **EP 1 428 940 A2**
(43) Veröffentlichungstag der Anmeldung: **16.06.2004**
(21) Anmeldenummer: 03028371.7
(22) Anmeldetag: 10.12.2003
(51) Int. Cl.: E03B 3/03, B65D 88/76

(54) **Versickerungs- und Rückhaltevorrichtung für Regenwasser**

(30) Priorität: 10.12.2002 DE 20219139 U
(71) Anmelder: ELWA Wassertechnik GmbH, 49809 Lingen (DE)
(72) Erfinder: Heitker, Martin, 49809 Lingen (DE)
(74) Vertreter: Busse, Dietrich, Dipl.-Ing.

(57) **Zusammenfassung**

Bekannte Versickerungs- und Rückhalteanlage für Regenwasser sind mit einem wandungsseitig wasserdurchlässigen Speicherbehälter aus zumindest einem Kunststoff-Hohlkörper versehen. Dieser ist in Einbaulage in eine von Füllmaterial und/oder stehendem Boden umgebene Sickergrube verbracht, so daß über einen Zulauf in den Hohlkörper eingeleitetes Regenwasser aufnehmbar, zwischenspeicherbar und in die umgebende Erdstruktur ausleitbar ist. In erfindungsgemäßer Ausführung ist dem in Einbaulage befindlichen Hohlkörper im Bereich zumindest einer seiner vertikalen Seitenflächen ein in einer bodenseitigen Stützstellung festgelegtes Schutzelement zugeordnet. Dieses Schutzelement kann einerseits an diesem anliegenden Erddruck aufnehmen und andererseits ist der Hohlkörper von horizontalen Druckkräften weitgehend freigehalten.

## Beschreibung

Die Erfindung betrifft eine Versickerungs- und Rückhalteanlage für insbesondere Regenwasser, mit einem wandungsseitig wasserdurchlässigen Speicherbehälter, gemäß dem Oberbegriff des Anspruchs 1.

Bekannte Versickerungs- und Rückhalteanlagen für Regenwasser (WO 95/16833, FR 2 659 996) sind als unterirdische Systeme aus einzelnen Modulen in Form von Hohlkörpern aus Kunststoff zusammengesetzt, mit denen entsprechend der Anzahl der eingesetzten Module unterschiedlich große Speicherbehälter aufgebaut werden. Mittels deren wasserdurchlässige Seitenwandungen ist eine Speicherung und zeitversetzte Ableitung auch großer Wasservolumina möglich. Diese vergrößerte Speicherkapazität der Anlage erfordert eine Übereinanderanordnung mehrerer Lagen von Modulen und für diese besteht die Gefahr, daß in der Einbaulage durch seitlichen Erddruck einzelne der Hohlkörper zusammengedrückt werden und damit die gesamte Anlage Beschädigungen erfahren kann.

Die Erfindung befaßt sich mit dem Problem, eine Versickerungs- und Rückhalteanlage für Regenwasser zu schaffen, deren den Speicherbehälter bildende Hohlkörper in größeren Einbautiefen und mit großer Einbauhöhe stapelbar sind, dabei mit geringem technischen und zeitlichen Aufwand eine beschädigungssichere Einbaulage erreicht ist und diese Anlagen einen langzeitigen Betrieb ohne Störungen ermöglichen.

Ausgehend von einer Versickerungs- und Rückhalteanlage für Regenwasser nach dem Oberbegriff des Anspruchs 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 16 verwiesen.

Die erfindungsgemäß ausgebildete Versickerungs- und Rückhalteanlage ist im Bereich ihrer den Speicherbehälter modular ausfüllenden Hohlkörper mit einem diesen außenseitig zugeordneten Schutzelement versehen, so daß die Bauteile dieses Speicherbehälters als eine funktionale Baueinheit zusammenwirken. Zum Aufbau dieser Einheit werden innerhalb einer die Module aufnehmenden Sickergrube die Schutzelemente als zusätzliche Bauteile nach Art einer sogenannten Spundwand installiert, so daß danach die den Innenraum füllenden Hohlkörper-Module mit ihren äußeren Seitenflächen an die Schutzelemente angrenzen.

Damit wird nach dem Verfüllen der Sickergrube eine Anlage bereitgestellt, deren insbesondere mehrlagiger Modul-Stapel vor einem direkten Eintrag von horizontalen Druckkraft-Komponenten aus der angrenzenden Erdlast bzw. aus dem an den Schutzelementen anliegenden Füllmaterial geschützt ist. Die zur Querkraftaufnahme in ihrer Stabilität begrenzt herstellbaren Seitenwände der insbesondere aus Kunststoff bestehenden Hohlkörper sind durch diese Baueinheit mit den als Vorbauwand wirksamen Schutzelementen im wesentlichen von Querkräften freigehalten, so daß auch bei erhöhtem Erddruck, beispielsweise bei Schwerlastverkehr im Bereich der Anlage, ein ungewolltes Einknicken von Modulen vermieden und damit die Versickerungs- und Rückhalteanlage langzeitsicher betreibbar ist.

Die Schutzelemente sind dabei mit ihrem unteren Ende im Bereich des stehenden Erdbodens (Sohlplanum) fixiert, die vertikale Innenseite des Schutzelementes liegt an den gestapelten Hohlkörpern an und ein oberer Endbereich der Schutzelemente liegt seinerseits an einer über den Hohlkörpern befindlichen Deckenlage in Form einer Erdüberdeckung an, so daß damit jedes der Schutzelemente nach Art einer Erddruckbrücke wirksam ist und horizontale Druckkomponenten der umgebenden Erdlast in die untere und obere Boden- bzw. Deckenlage abgeleitet werden.

Beim Einbau der Anlage in einer im wesentlichen quaderförmigen Sickergrube versteht es sich, daß sämtliche Seitenwände des Speicherbehälters mit einem oder mehreren der Schutzelemente versehen sind. Damit wird die Versickerungs- und Rückhalteanlage nach Art einer wandungsseitig wasserdurchlässigen Stütz-Wanne vorgefertigt, so daß danach der Innenraum mit den Hohlkörpern gefüllt werden kann. Ebenso ist denkbar, zuerst die Hohlkörper mehrlagig in der Sickergrube zu stapeln, danach die entsprechenden Schutzelemente nahe den vertikalen Seitenflächen zu positionieren und dann die Schutzelemente am Boden der Sickergrube in ihrer Stützstellung festzulegen.

Weitere Einzelheiten und Vorteile der Erfindung ergeben sich aus der nachfolgenden Beschreibung und der Zeichnung, die mehrere Ausführungsbeispiele von Schutzelementen für die erfindungsgemäße Versickerungs- und Rückhalteanlage zeigt. In der Zeichnung zeigen:
- Fig. 1: eine perspektivische Prinzipdarstellung der Versickerungs- und Rückhalteanlage für Regenwasser mit einen Speicherbehälter definierenden Hohlkörpern, die außenseitig von vertikalen Schutzelementen umgeben sind,
- Fig. 2: eine Ausschnittsdarstellung gemäß einer Linie II-II in Fig. 1 mit dem prinzipiellen Aufbau der Schutzelemente und deren bodenseitige sowie überdeckungsseitige Festlegung,
- Fig. 3: eine Prinzipdarstellung ähnlich Fig. 2 mit jeweiligen Füllmaterialien im Bereich einer verfüllten Sickergrube,
- Fig. 4: eine Draufsicht der Versickerungs- und Rückhalteanlage gemäß einem Ausschnitt IV-IV in Fig. 2,
- Fig. 5: eine vergrößerte Stirnansicht gemäß einem Pfeil V in Fig. 1 mit den Schutzelementen und einer in diesen vorgesehenen Zulauföffnung,
- Fig. 6 bis Fig. 9: jeweilige geschnittene Einzeldarstellungen von verschiedenen Ausführungsformen des Schutzelementes in Form von Trapezblechen,
- Fig. 10: eine Ausschnittsdarstellung ähnlich Fig. 4 mit zwischen den Trapezblechen vorgesehenen Abstandhaltern
- Fig. 11: eine Prinzipdarstellung von Schutzelementen in Form von Wandelementen aus Beton,
- Fig. 12: eine Perspektivdarstellung ähnlich Fig. 11 mit Stützfüße aufweisenden Betonteilen, und
- Fig. 13: jeweilige Betonteile ähnlich Fig. 11 und 12 mit Durchlaßöffnungen.

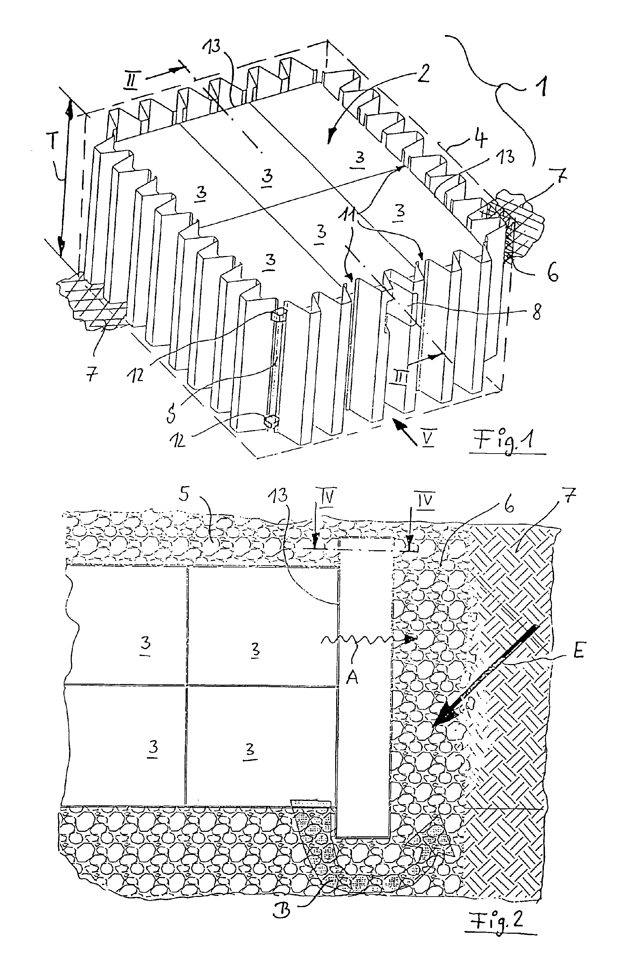

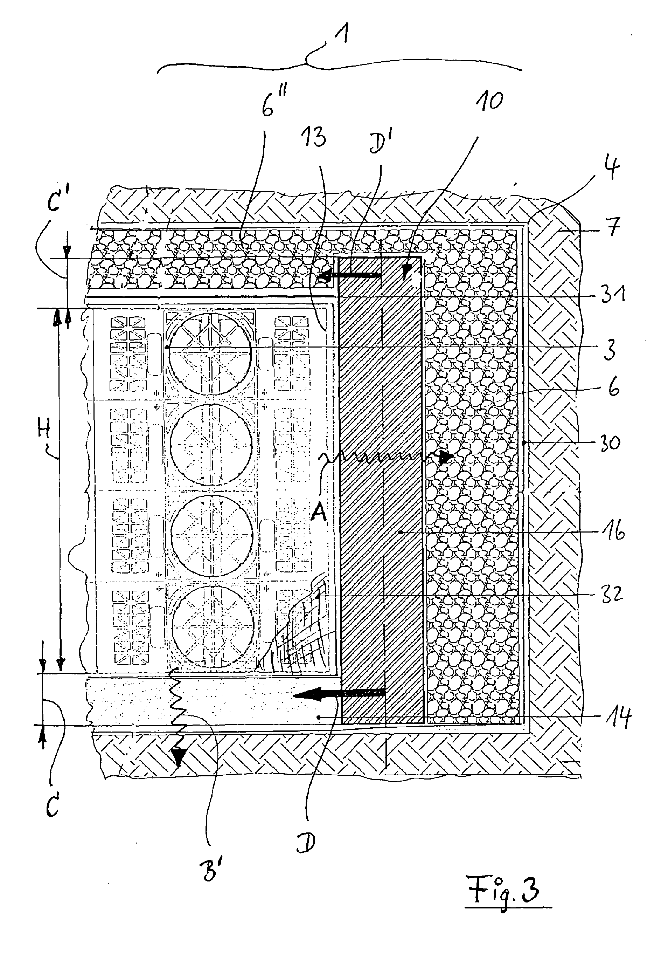

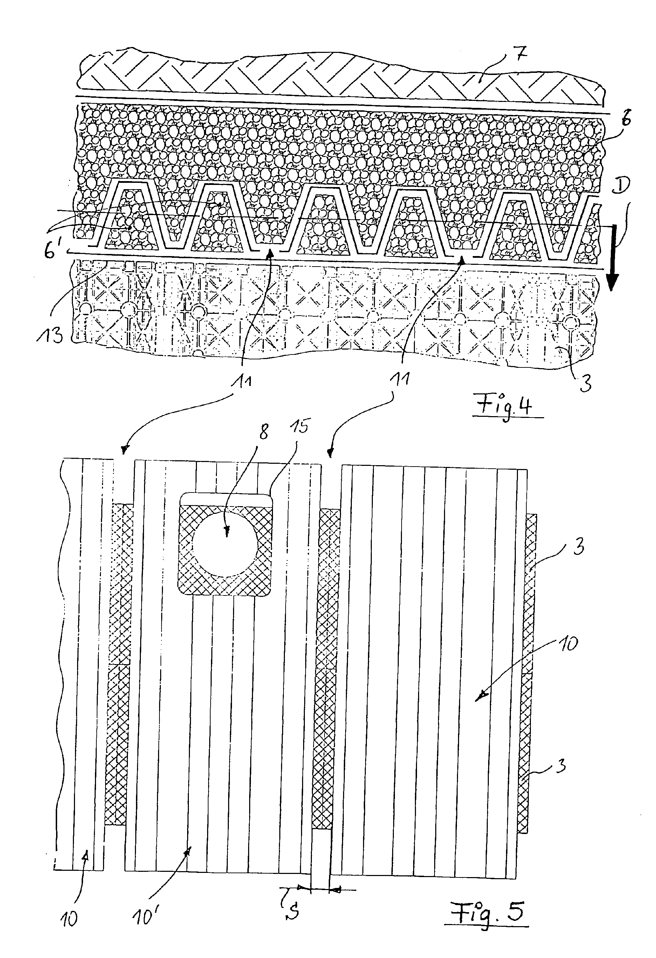

In Fig. 1 ist in einer teilweise geschnittenen Perspektivansicht eine insgesamt mit 1 bezeichnete Versickerungs- und Rückhalteanlage für Regenwasser dargestellt, die einen Speicherbehälter 2 aufweist, der wandungsseitig wasserdurchlässig ist (Fig. 2, Pfeil A und Pfeil B). In bekannter Ausführung besteht ein derartiger Speicherbehälter 2 aus einem oder mehreren Kunststoff-Hohlkörpern 3, die in Einbaulage in eine mit Strichlinien verdeutlichte Sickergrube 4 eingebracht sind. Nach diesem Einbau werden eine oberseitige Deckenlage 5 bzw. seitliches Füllmaterial 6 (Fig. 2, Fig. 3) in die Sickergrube 4 eingebracht, so daß im Speicherbehälter 2 befindliche Flüssigkeit weitgehend ungehindert bis in den stehenden Boden 7 versickern kann. Die in ihrer Größe variabel ausführbare Anlage 1 wird an eine Oberflächenwasserzuleitung angeschlossen, so daß über einen Zulauf 8 (Fig. 5) in die Hohlkörper 3 Regenwasser eingeleitet wird, dieses im Speicherbehälter 2 zwischenspeicherbar ist und dann zeitversetzt in die umgebende Erdstruktur ausgeleitet werden kann.

Die erfindungsgemäß ausgebildete Versickerungs- und Rückhalteanlage 1 ist im Bereich der in Einbaulage befindlichen Hohlkörper 3 mit Schutzelementen 10 versehen, die zumindest einer der vertikalen Seitenfläche 13 der Hohlkörper 3 zugeordnet sind. Ebenso ist denkbar, daß das zumindest eine Schutzelement 10 nur einem der Hohlkörper 3 zugeordnet ist (nicht dargestellt).

Diese Schutzelemente 10 sind bodenseitig im Bereich des stehenden Sohlenbodens 7 bzw. im Füllmaterial 6 so festgelegt, daß bereits bei einseitig auftretendem Erddruck (Pfeil E, Fig. 2) im Bereich einer der Längsseiten des Speicherbehälters 2 eine horizontale Komponente des Erddruckes durch die Schutzelemente 10 aufnehmbar ist und die hinter den Schutzelementen 10 befindlichen Hohlkörper 3 von horizontalen Belastungen weitgehend freigehalten werden.

Die in Fig. 1 bis 5 dargestellte Ausführung der Versickerungs- und Rückhalteanlage 1 zeigt, daß mehrere der Schutzelemente 10 einer Vielzahl der Hohlkörper 3 so zugeordnet sind, daß der Speicherbehälter 2 insgesamt von Bauteilen nach Art einer Vorbauwand umgeben ist. Diese in Längs- und Querrichtung der Sickergrube 4 verlaufende Vorbauwand bildet in der vorgefertigten Sickergrube 4 eine im wesentlichen rechteckige Schutzwanne aus Schutzelementen 10, hinter denen die Hohlkörper 3 mehrlagig zu einem großvolumigen Speicherbehälter 2 stapelbar sind.

Die wandungsseitig wasserdurchlässigen Hohlkörper 3 (Pfeil B, Fig. 2) sind dabei mit den Schutzelementen 10 so kombiniert, daß zur außenseitig anliegenden Erdstruktur (Fig. 2, Füllmaterial 6, stehender Boden 7) hin ebenfalls wasserdurchlässige Abstandsbereiche 11 (Fig. 1, 4) zwischen den vertikalen Schutzelementen 10 verbleiben und damit auch senkrecht zur Vorbauwand in einer Pfeilrichtung A eine weitgehend ungehinderte Versickerung des Regenwassers möglich ist. Die Prinzipdarstellung gemäß Fig. 10 verdeutlicht in diesem Zusammenhang, daß zwischen den zur Vorbauwand aneinandergereihten Schutzelementen 10 ein definierter Durchlaßspalt S dadurch vorgegeben wird, daß die Abstandsbereiche 11 mit Abstandhaltern 12 versehen sind.

Die vertikale Schnittdarstellung gemäß Fig. 3 verdeutlicht, daß die Schutzelemente 10 die vertikale Höhe H der von den Hohlkörpern 3 definierten Seitenfläche 13 zumindest am unteren bodenseitigen Ende überragen (Abstandsmaß C). In zweckmäßiger Ausführung sind die Schutzelemente 10 so dimensioniert, daß diese sowohl unterhalb (Abstandsmaß C) als auch oberhalb (Abstandsmaß C') der Hohlkörper 3 an einer jeweiligen den Hohlkörpern 3 zugeordneten Erdstruktur-Lage anliegen, wobei als untere Lage eine als Sauberkeitsschicht vorgesehene Sandschicht 14 vorgesehen sein kann und als obere Lage die aus Kies gebildete Füllmateriallage 6 vorgesehen ist. Mit dieser die Schutzelemente 10 direkt erfassenden Abstützung ist erreicht, daß die mit Pfeilen D und D' als Wirkungskomponente des Erddruckes E verdeutlichten horizontalen Druckkräfte von den Schutzelementen 10 aufnehmbar sind, damit von den Hohlkörpern 3 ferngehalten werden und diese Kräfte mittels der eine Erdlastbrücke bildenden Schutzelemente 10 bodenseitig ableitbar sind. Damit ist das Versickerungs- und Rückhaltesystem 1 für Regenwasser stabilisiert und dessen Einbau auch in weniger stabilen Erdstrukturen in großer Einbautiefe möglich.

Eine erste praktische Erprobung der Anlage 1 erbrachte, daß die in mehreren Lagen übereinander angeordneten Hohlkörper 3 vorteilhaft zu einem eine rechteckige Umfangskontur aufweisenden Speicherbehälter 2 (Fig. 1) zusammengefaßt werden können. Dabei ist es durch die Schutzelemente 10 nunmehr möglich, die modularen Hohlkörper 3 bis in Sohlentiefen T (Fig. 1) von 8 m und tiefer zu stapeln. Dabei überragen die Schutzelemente 10 die unterste bzw. oberste Lage der Hohlkörper 3 um insbesondere 10 cm bis 60 cm (Abstandsmaß C, C').

In der Darstellung gemäß Fig. 5 sind die Schutzelemente 10 in einer Seitenansicht der Anlage 1 verdeutlicht, wobei das Schutzelement 10' im Bereich des Zulaufs 8 eine ein Rohr (nicht dargestellt) aufnehmende Durchlaßöffnung 15 aufweist. Denkbar ist dabei auch, daß sämtliche der Schutzelemente 10 mit derartigen Durchlaßöffnungen 15 versehen werden und der Innenraum des Speicherbehälters 2 von mehreren Seiten aus füllbar ist.

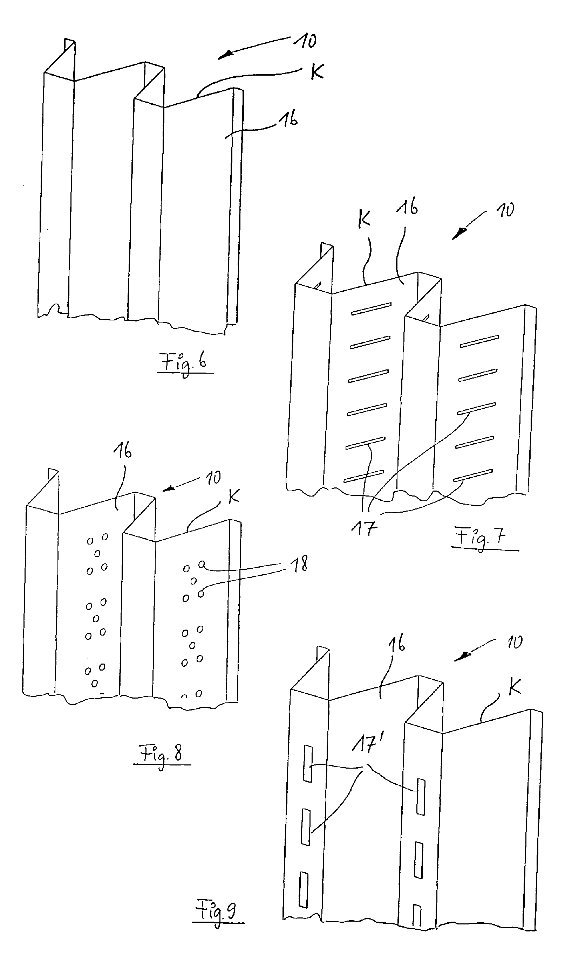

Die Einzeldarstellungen gemäß Fig. 6 bis 9 verdeutlichen eine bevorzugte Ausführung der einzelnen Schutzelemente 10 als ein jeweiliges Trapezblech 16, das in der gemäß Fig. 3 dargestellten Einbaulage bodenseitig in der Sandschicht 14 festgelegt ist. Denkbar ist auch, das Trapezblech 16 nach Art eines Spundbleches in den gewachsenen Boden 7 einzudrücken (nicht dargestellt).

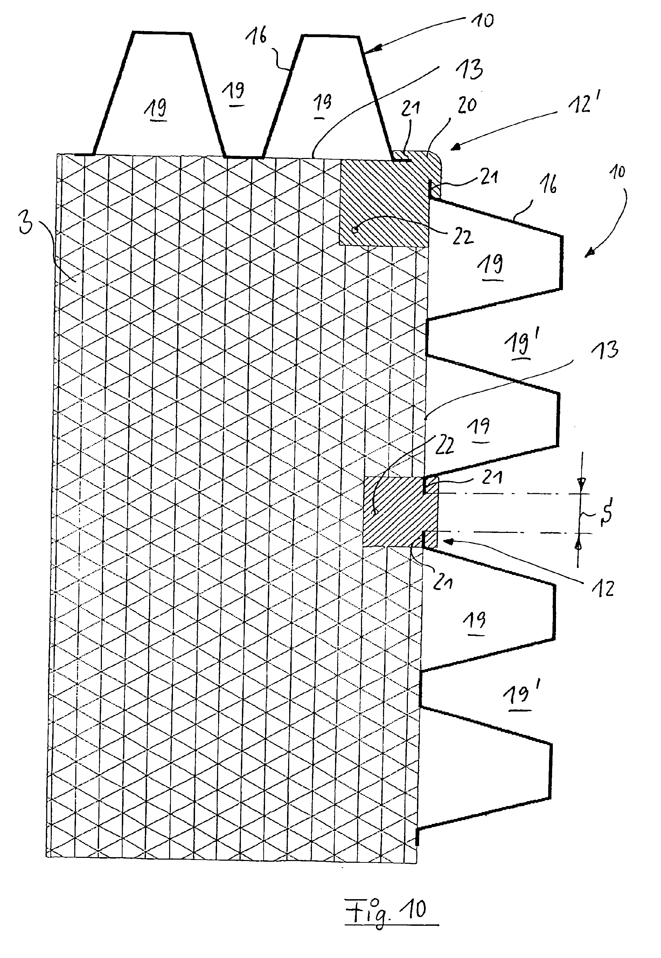

In den Ausführungsformen gemäß Fig. 7 bis 9 ist das Trapezblech 16 mit jeweiligen als Austrittsöffnungen für das Regenwasser vorgesehenen Durchlaßöffnungen versehen, die in weitgehend beliebiger Ausführung als Schlitze 17, 17' oder Bohrungen 18 ausgeführt sein können.

Das in seinem Querschnitt eine abgekantete Wellenkontur K bildende Trapezblech 16 definiert in seiner vertikalen Einbaulage (Fig. 10) innere 19 und äußere Aufnahmekanäle 19'. Dabei sind sowohl die außenseitigen Kanäle 19' mit dem Füllmaterial 6 gefüllt und auch in den zu den Hohlkörpern 3 gerichteten Aufnahmekanälen 19 das Füllmaterial 6' vorgesehen (Fig. 4).

Die Draufsicht gemäß Fig. 10 zeigt die jeweiligen Abstandshalter 12, 12' zwischen den an der Seitenfläche 13 verlaufenden Schutzelementen 10, wobei diese Ausführung im jeweiligen Eckbereich Abstandshalter 12' aufweist, die mit einem erweiterten Formansatz 20 versehen sind. Die Abstandhalter 12, 12' nehmen die Trapezbleche 16 in jeweiligen Stecknuten 21 auf und im Bereich der Hohlkörper 3 sind die Abstandshalter 12, 12' durch eine Steck- und/oder Schraubverbindung 22 festgelegt.

In Fig. 11 bis 13 sind jeweilige Schutzelemente 10' in einer weiteren denkbaren Ausführungsform dargestellt, wobei in Fig. 11 jeweilige Stützplatten 23, 23' aus Beton dargestellt sind, die im Abstand zueinander das Spaltmaß S bilden können oder unmittelbar aneinanderliegen (nicht dargestellt), wobei eine der Platten 23' aus einem porösen Material besteht und damit der stabile und wasserdurchlässige Vorbau mit Schutzelementen 10' aufgebaut werden kann.

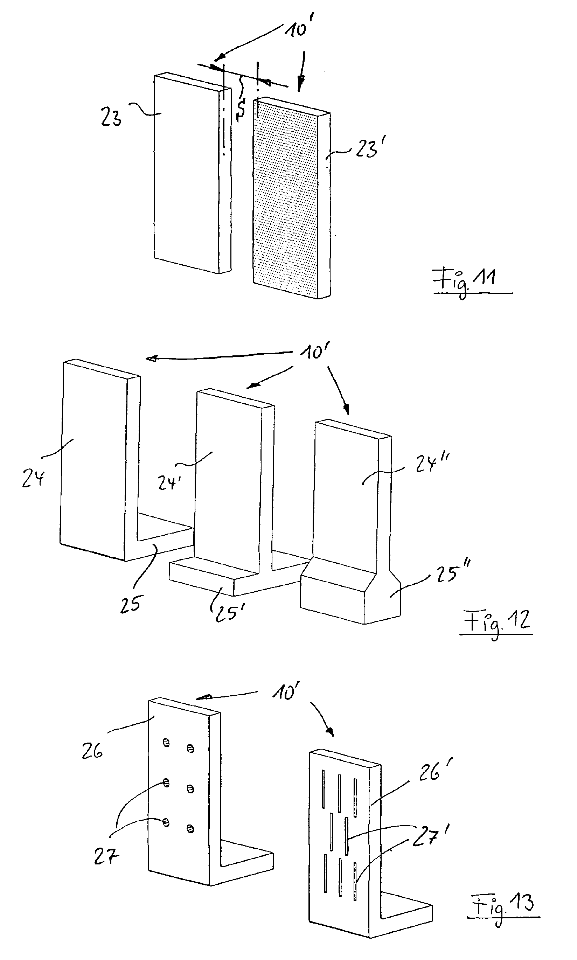

Ausgehend von diesen einfachen Betonplatten 23, 23' sind in der Ausführung gemäß Fig. 12 Betonelemente 24, 24' und 24" mit fußseitigen Stützkonturen 25, 25', 25" dargestellt und in der Ausführungsform gemäß Fig. 13 weisen die Betonteile 26, 26' jeweilige Bohrungen 27 bzw. Schlitze 27' als Durchlaßöffnungen auf.

Der in Fig. 3 dargestellte Aufbau der Anlage 1 zeigt weitere im Bereich der als Lastverteilungswand wirksamen Trapezbleche 16 vorgesehene Einzelteile des Systems. Die in den stehenden Boden 7 eingebrachte Sickergrube 4 ist dabei allseitig mit einem wasserdurchlässigen Geotextil 30 versehen, an den das aus Kies bestehende Füllmaterial 6" anliegt. Oberhalb der Hohlkörper 3 kann neben dem Geotextil 30 eine PE-Schutzbahn 31 als mechanischer Schutz vorgesehen sein, so daß ein Eindringen von Erdteilen durch hohe Erdauflast in die Hohlkörper 3 verhindert ist.

## Patentansprüche

1. Versickerungs- und Rückhalteanlage für Regenwasser, mit einem wandungsseitig wasserdurchlässigen Speicherbehälter (2) aus zumindest einem Kunststoff-Hohlkörper (3), der in Einbaulage in eine von Füllmaterial (6, 6', 6") und/oder stehendem Boden (7) umgebene Sickergrube (4) verbracht ist, so daß über einen Zulauf (8) in den Hohlkörper (3) eingeleitetes Regenwasser aufnehmbar, zwischenspeicherbar und in die umgebende Erdstruktur ausleitbar ist, **dadurch gekennzeichnet, daß** dem in Einbaulage befindlichen Hohlkörper (3) im Bereich zumindest einer seiner vertikalen Seitenflächen (13) ein in einer bodenseitigen Stützstellung festgelegtes Schutzelement (10; 10') zugeordnet ist, derart, daß mit dem Schutzelement (10; 10') einerseits an diesem anliegender Erddruck (E) aufnehmbar und andererseits der Hohlkörper (3) von horizontalen Druckkräften (D, D') weitgehend freigehalten ist.

2. Versickerungs- und Rückhalteanlage nach Anspruch 1, **dadurch gekennzeichnet, daß** das Schutzelement (10) eine die vom Hohlkörper (3) definierte Seitenfläche (13) zumindest am unteren bodenseitigen Ende überragende vertikale Höhe (H) aufweist.

3. Versickerungs- und Rückhalteanlage nach Anspruch 1 oder 2, **dadurch gekennzeichnet, daß** das Schutzelement (10) unterhalb und oberhalb des Hohlkörpers (3) an einer Stützschicht (14, 6") anliegt.

4. Versickerungs- und Rückhalteanlage nach einem der Ansprüche 1 bis 3, **dadurch gekennzeichnet, daß** mehrere Schutzelemente (10) einem oder mehreren der Hohlkörper (3) als eine vertikale Vorbauwand zugeordnet sind.

5. Versickerungs- und Rückhalteanlage nach einem Ansprüche 1 bis 4, **dadurch gekennzeichnet, daß** die aus mehreren Schutzelementen (10) aufgebaute Vorbauwand in der vorgefertigten Sickergrube (4) eine im wesentlichen rechteckige Schutzwanne bildet und in dieser die Hohlkörper (3) mehrlagig stapelbar sind.

6. Versickerungs- und Rückhalteanlage nach einem der Ansprüche 1 bis 5, **dadurch gekennzeichnet, daß** die Schutzelemente (10) zur außenseitig anliegenden Erdstruktur (6, 6', 7) hin wasserdurchlässig sind und/oder die nebeneinander angeordneten Schutzelemente (10) wasserdurchlässige Abstandsbereiche (11) in der Vorbauwand bilden.

7. Versickerungs- und Rückhalteanlage nach einem der Ansprüche 1 bis 6, **dadurch gekennzeichnet, daß** zwischen zur Vorbauwand aneinandergereihten Schutzelementen (10) jeweilige einen Durchlaßspalt (S) bildende Abstandhalter (12) vorgesehen sind.

8. Versickerungs- und Rückhalteanlage nach einem der Ansprüche 1 bis 7, **dadurch gekennzeichnet, daß** der Speicherbehälter (2) aus mehreren Lagen vertikal übereinander angeordneter und horizontal aneinandergereihter Hohlkörper (3) aufgebaut ist und die Schutzelemente (10) der Vorbauwand in vertikaler Richtung über die obere und untere Lage der Hohlkörper (3) überstehen.

9. Versickerungs- und Rückhalteanlage nach einem der Ansprüche 1 bis 8, **dadurch gekennzeichnet, daß** die in mehreren Lagen übereinander angeordneten Hohlkörpern (3) einen eine rechteckige Umfangskontur aufweisenden Speicherbehälter (2) mit einer Sohlentiefe (T) von 2 m bis 8 m, insbesondere 6 m, bilden und die Schutzelemente (10) die unterste bzw. oberste Lage der Hohlkörper (3) um jeweils 10 cm bis 60 cm, vorzugsweise 20 cm, überragen.

10. Versickerungs- und Rückhalteanlage nach einem der Ansprüche 1 bis 9, **dadurch gekennzeichnet, daß** als Schutzelement (10) jeweilige im Querschnitt eine Wellenkontur (K) aufweisende Trapezbleche (16) vorgesehen sind.

11. Versickerungs- und Rückhalteanlage nach Anspruch 10, **dadurch gekennzeichnet, daß** die Trapezbleche (16) durch die diese verbindenden Abstandhalter (12) in Einbaulage den vertikalen Spalt (S) bilden.

12. Versickerungs- und Rückhalteanlage nach Anspruch 10 oder 11, **dadurch gekennzeichnet, daß** die Trapezbleche (16) mit Durchlaßöffnungen (17, 17', 18) versehen sind.

13. Versickerungs- und Rückhalteanlage nach einem der Ansprüche 10 bis 12, **dadurch gekennzeichnet, daß** die Trapezbleche (16) in Einbaulage vertikale Aufnahmekanäle (19, 19') bilden und in diese ein Füllmaterial (6') eingebracht ist.

14. Versickerungs- und Rückhalteanlage nach einem der Ansprüche 1 bis 13, **dadurch gekennzeichnet, daß** als Hohlkörper (3) jeweilige aus Kunststoff geformte, monolithische Sickerblöcke vorgesehen und diese im Bereich jeweiliger Stapelprofile (22) miteinander verbunden sind.

15. Versickerungs- und Rückhalteanlage nach einem der Ansprüche 1 bis 14, **dadurch gekennzeichnet, daß** die an den Sickerblöcken (3) anliegenden Schutzelemente (10') aus einem wasserdurchlässigen porösen Material bestehen.

16. Versickerungs- und Rückhalteanlage nach einem der Ansprüche 1 bis 14, **dadurch gekennzeichnet, daß** das Schutzelement (10') von einem Betonformteil (23, 23'; 24, 24', 24"; 26, 26') gebildet ist.
